# EUROPEAN PATENT APPLICATION

(11) **EP 4 701 218 A1**
(43) Date of publication of application: **25.02.2026**
(21) Application number: 24792554.8
(22) Date of filing: 08.04.2024
(51) Int. Cl.: H04N 23/698, G03B 15/00, G03B 19/02, G03B 37/00, G06T 7/20, H04N 23/55, H04N 23/60

(54) **IMAGING DEVICE**

(30) Priority: 20.04.2023 JP 2023069636
(71) Applicant: Kyocera Corporation, Kyoto-shi, Kyoto 612-8501 (JP)
(72) Inventor: SUGAHARA Shun, Kyoto-shi, Kyoto 612-8501 (JP)
(74) Representative: Viering, Jentschura & Partner mbB Patent- und Rechtsanwälte
(86) International application number: PCT/JP2024/014327
(87) International publication number: WO 2024/219279

(57) **Abstract**

An imaging device (10) includes: an optical system (11) configured to form an image of incident first light on a predetermined light receiving area of an imaging element (12); an optical element (13) configured to guide second light, the angle between an optical axis of the optical system and a principal ray of the second light incident on the optical system being different from that of the first light, to the predetermined light receiving area, superimpose the second light on the image of the first light, and allow the second light to be captured by the imaging element; and a controller (14) configured to separate the image formed by the first light and an image formed by the second light from an image signal of a superimposed image output by the imaging element in which the image formed by the first light and the image formed by the second light are superimposed. The controller separates the image formed by the first light and the image formed by the second light based on the fact that a movement direction of an arbitrary subject image in the superimposed image is different in the image formed by the first light and the image formed by the second light.

## Description

### CROSS-REFERENCE TO RELATED APPLICATIONS

This application claims priority of Japanese Patent Application No. 2023-069636 (filed April 20, 2023), the entire disclosure of which is hereby incorporated by reference.

### TECHNICAL FIELD

The present disclosure relates to an imaging device.

### BACKGROUND OF INVENTION

Imaging optical systems that form an image of an observation target have various physical properties such as focal length and angle of view. When the focal length is longer, an enlarged image of the observation target is formed, and therefore detailed optical information of a distant observation target, in other words, enlarged optical information, can be obtained. The wider the angle of view, the more optical information on the observation target located across a wider range can be obtained. However, there is a trade-off relationship between focal length and angle of view. When the focal length is longer, the angle of view becomes narrower, and when the focal length is shorter, the angle of view becomes wider.

Therefore, the focal length is adjusted so that desired optical information can be obtained in accordance with the situation. For example, the focal length is adjusted by displacing a zoom lens included in the imaging optical system. In addition, the focal length is adjusted by switching between multiple fixed focal length lenses (see Patent Literatures 1 and 2).

### CITATION LIST

### PATENT LITERATURE

Patent Literature 1: Japanese Unexamined Patent Application Publication No. 11-311832
Patent Literature 2: Japanese Unexamined Patent Application Publication No. 2004-279556

### SUMMARY

(1) In an embodiment of the present disclosure, an imaging device includes an optical system, an optical element, and a controller.

The optical system is configured to form an image of incident first light on a predetermined light receiving area of an imaging element.

The optical element is configured to guide second light, an angle between an optical axis of the optical system and a principal ray of the second light incident on the optical system being different from that of the first light, to the predetermined light receiving area, superimpose the second light on the image of the first light, and allow the second light to be captured by the imaging element.

The controller is configured to separate the image formed by the first light and an image formed by the second light from an image signal of a superimposed image output by the imaging element in which the image formed by the first light and the image formed by the second light are superimposed.

The controller separates the image formed by the first light and the image formed by the second light on a basis that a movement direction of movement of an arbitrary subject image in the superimposed image is different in the image formed by the first light and the image formed by the second light.

(2) As an embodiment of the present disclosure, in (1),
the controller uses optical flow to detect the movement direction of the arbitrary subject image.

(3) As an embodiment of the present disclosure, in (1) or (2),
the imaging device includes a plurality of the optical systems and a plurality of the optical elements, the optical systems and the optical elements configuring a stereo camera.

The controller uses a plurality of the superimposed images captured from different positions at a same time to detect the movement direction of the arbitrary subject image.

(4) As an embodiment of the present disclosure, in (1) or (2),
the controller uses a plurality of the superimposed images captured at different times to detect the movement direction of the arbitrary subject image.

(5) As an embodiment of the present disclosure, in any of (1) to (4),
the controller separates the image formed by the first light and the image formed by the second light using an image separation model generated by machine learning.

The image separation model is a model constructed by creating a learning superimposed image in advance by superimposing multiple images, and performing machine learning on the learning superimposed image by using the multiple images as a correct answer.

(6) In an embodiment of the present disclosure, an imaging device includes an optical system and a controller.

The optical system is configured to form an image of incident first light on a predetermined light receiving area of an imaging element.

The controller is configured to separate an image formed by the first light and an image formed by second light from an image signal of a superimposed image captured by superimposing the image formed by the second light for which an angle between an optical axis of the optical system and a principal ray of the second light incident on the optical system is different from that of the first light.

A movement direction of an arbitrary subject image in the superimposed image is different in the image formed by the first light and the image formed by the second light.

### BRIEF DESCRIPTION OF THE DRAWINGS

FIG. 1 is a schematic diagram illustrating the main configuration of an imaging device according to an embodiment of the present disclosure.
FIG. 2 is a diagram illustrating an imaging device configured as a stereo camera.
FIG. 3 is a diagram for explaining the positions of an imaging element and an optical system in FIG. 1.
FIG. 4 is a conceptual diagram for explaining an image reaching a light receiving area in FIG. 1.
FIG. 5 is a conceptual diagram for explaining a situation in which a superimposed image that reaches the light receiving area in FIG. 1 is formed.
FIG. 6 is a conceptual diagram for explaining a process of generating a restored image from a superimposed image.
FIG. 7 is a diagram for explaining a difference in a movement direction of an image formed by first light and an image formed by second light.
FIG. 8 is a flowchart for explaining distance measurement processing executed by a controller.

### DESCRIPTION OF EMBODIMENTS

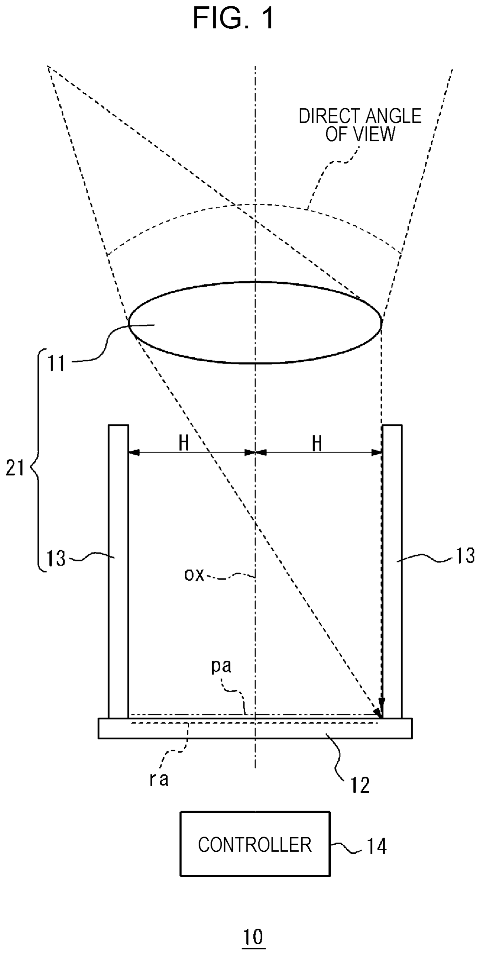

Hereinafter, an imaging device 10 (see FIG. 1) according to an embodiment of the present disclosure will be described with reference to the drawings. In the components illustrated in the drawings referred to below, the same components are denoted by the same reference symbols. The drawings illustrating the embodiment are schematic drawings. The dimensional ratios and so forth in the drawings do not necessarily correspond to the actual ones.

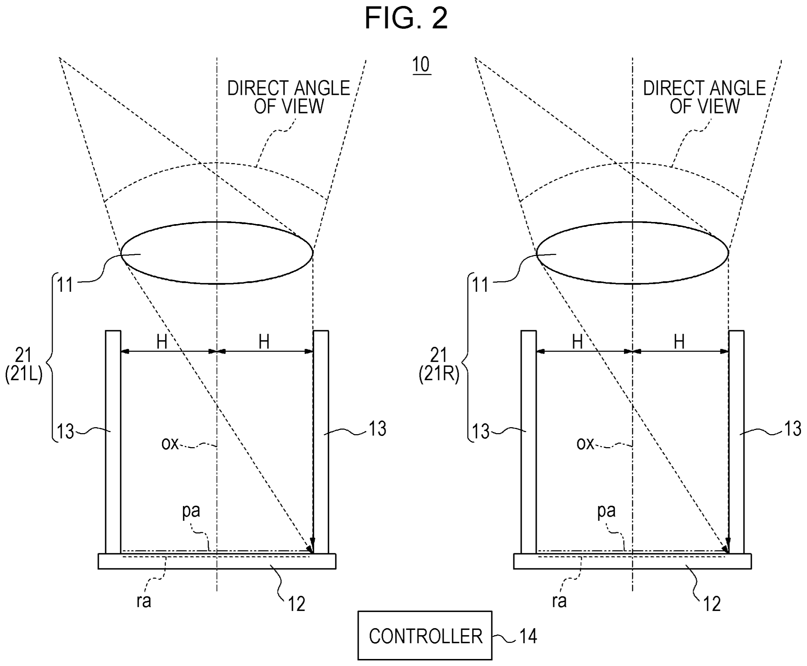

FIG. 1 is a schematic diagram illustrating the main configuration of the imaging device 10 according to this embodiment. FIG. 2 is a diagram illustrating the imaging device 10 configured as a stereo camera. The imaging device 10 according to this embodiment will be described as being configured as a stereo camera. However, since the same components are arranged multiple times when the imaging device 10 is configured as a stereo camera, the description may be made using a diagram illustrating the main components of the imaging device 10 as in FIG. 1 in order to avoid repetition and to make the description easier to understand.

As illustrated in FIG. 1, the imaging device 10 includes an optical device 21 and a controller 14. The imaging device 10 may further include an imaging element 12. The optical device 21 further includes an imaging optical system (optical system 11) and optical elements 13.

The optical system 11 forms an image of incident subject light beams. The optical system 11 forms an image of incident first light on a predetermined light receiving area pa of the imaging element 12. The predetermined light receiving area pa is a part or the whole of the light receiving area ra of the imaging element 12. The first light may be light emitted from object points located within the angle of view of the optical system 11 alone. The predetermined light receiving area pa may be, for example, a virtual plane or curved surface in a three-dimensional space whose center intersects an optical axis ox of the optical system 11. Hereinafter, the angle of view of the optical system 11 alone, in other words, the angle of view of the optical system 11 in a configuration that does not include the optical elements 13, may be referred to as the "direct angle of view". The optical system 11 is composed of optical members that form an image from light beams radiating from object points at different positions at different image points alone, in other words, without the optical elements 13. The optical members that constitute the optical system 11 are, for example, lenses, mirrors, and apertures.

The optical system 11 does not need to be an image-side telecentric system. In other words, the angle of the principal ray of any light beam passing through the optical system 11 with respect to the optical axis ox may be greater than 0°. Alternatively, the optical system 11 may be an image-side telecentric system.

The optical elements 13 guide second light incident on the optical system 11 to the predetermined light receiving area pa. For the second light, an angle between the optical axis ox of the optical system 11 and the principal ray incident on the optical system 11 is different from that of the first light. The second light may be light emitted from object points located outside the angle of view of the optical system 11, in other words, outside the direct angle of view. Therefore, the angle between a principal ray of the second light and the optical axis ox may be larger than the angle between a principal ray of the first light and the optical axis ox. The principal ray may be any one out of a ray passing through the center of an aperture stop of the optical system 11, a ray passing through the center of an entrance pupil of the optical system 11, and a ray at the center of a light beam emitted from an arbitrary object point and incident on the optical system 11. Furthermore, the optical elements 13 may form images of the second light that has passed through the optical system 11 in the predetermined light receiving area pa.

The optical elements 13 may be mirrors that reflect the second light and guide the second light to the predetermined light receiving area pa. In this embodiment, the optical elements 13 guide the second light to the predetermined light receiving area pa as images inverted from the image formed from the first light. The optical elements 13 superimpose the inverted images formed from the second light on the image formed from the first light and allow the imaging element 12 to capture an image. The optical elements 13 may be, for example, flat mirrors, curved mirrors, DMDs, or Fresnel mirrors.

The reflective surface of the mirrors may be parallel to the optical axis ox of the optical system 11. Alternatively, the reflective surfaces of the mirrors may not be parallel to the optical axis ox. For example, the reflective surfaces of the mirrors may be inclined with respect to the optical axis ox so as to be in an outwardly inclined orientation facing the optical system 11. In the outwardly inclined orientation, the angle of view of the entire optical device 21 may be made wider than in a configuration in which the reflective surfaces of the mirrors are parallel to the optical axis ox. For example, the reflective surfaces of the mirrors may be inclined with respect to the optical axis ox so as to be in an inwardly inclined orientation facing the imaging surface side of the optical system 11. In the inwardly inclined orientation, the entire optical device 21 may be made smaller in size compared to a configuration in which the reflective surfaces of the mirrors are parallel to the optical axis ox.

Here, the optical device 21 may include a lens for adjusting the optical path length arranged between the optical system 11 and the optical elements 13, which are mirrors. By arranging the lens for adjusting the optical path length, the shift of the focal position resulting from the optical path length being longer than that in a configuration in which the reflecting surfaces of the mirrors are parallel to the optical axis ox can be reduced. The lens for adjusting the optical path length may be, for example, a cylindrical lens. The optical device 21 may be configured to include a prism. The second light may be reflected by the optical elements 13, which are mirrors, and then reflected by the prism and guided to the predetermined light receiving area pa.

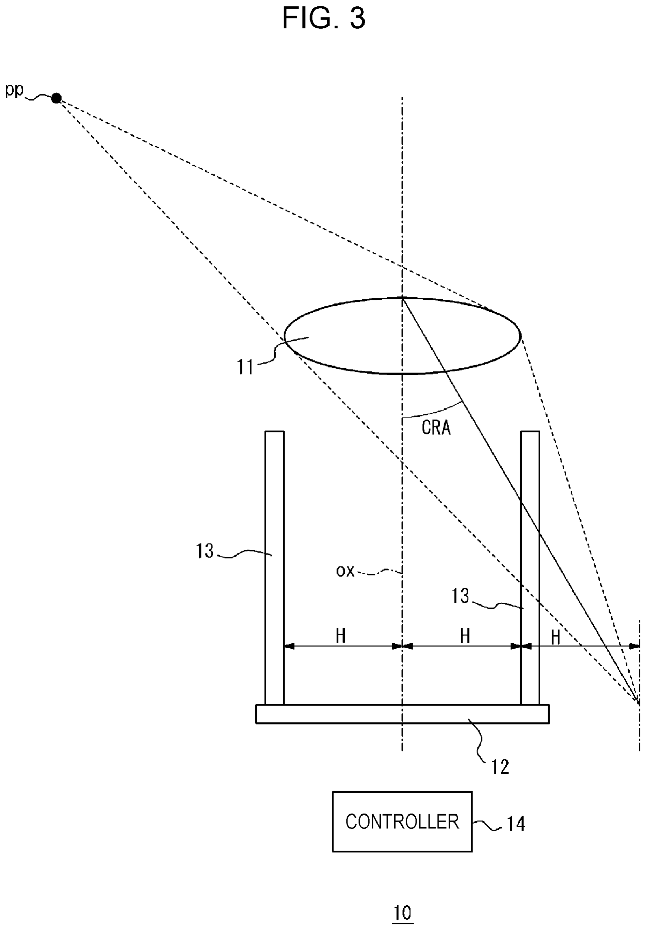

The mirrors may be arranged so that the reflecting surfaces are located outside the exit pupil of the optical system 11 as viewed from the optical axis ox of the optical system 11. Alternatively, the mirrors may be located inside the exit pupil as viewed from the optical axis ox of the optical system 11. In particular, in a configuration in which the light receiving area ra is smaller than the pupil diameter, the mirror may be located inside the exit pupil. The mirrors may include multiple plane mirrors. As illustrated in FIG. 3, a distance H between the optical axis ox and each of two plane mirrors whose reflecting surfaces are parallel to each other may be identical. The two parallel plane mirrors, the optical system 11, and the imaging element 12 may be designed and arranged to satisfy CRA ≤ tan⁻¹(H/B). CRA is the angle of the principal ray of the optical system 11 emitted from an object point (pp) at an angle twice the direct angle of view with respect to the optical axis ox. B is the back focus of the optical system 11.

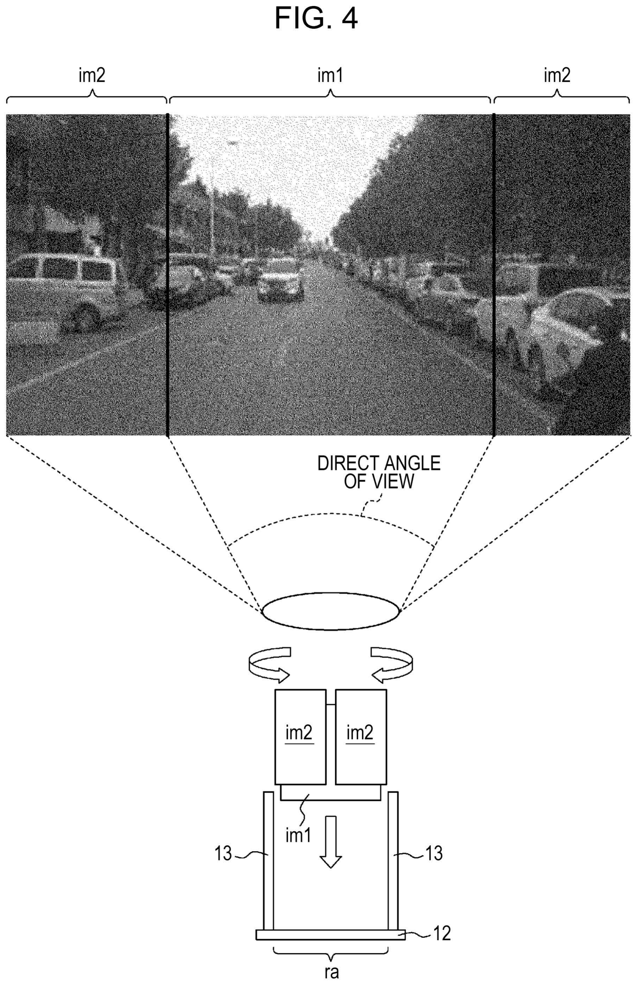

As illustrated in FIG. 4, a first image component im1 corresponding to object points within the direct angle of view, in other words, object points emitting the first light, reaches the light receiving area ra of the imaging element 12 without going via the optical elements 13. More specifically, the first image component im1 corresponding to object points within the direct angle of view corresponds to a subject image of a subject located within the direct angle of view. In addition, second image components im2 corresponding to object points outside the direct angle of view, in other words, object points emitting the second light, reach the light receiving area ra in an inverted form via the optical elements 13. More specifically, the second image components im2 corresponding to object points outside the direct angle of view correspond to subject images of subjects located outside the direct angle of view.

The imaging element 12 captures an image formed within the light receiving area ra. Here, the direct angle of view may be an angle of view corresponding to the range of object points imaged within the light receiving area ra without going via the optical elements 13. At least part of a light beam, which is the first light, which enters the optical system 11 from within the direct angle of view of the optical system 11 may form an image in the light receiving area ra. Furthermore, at least part of light beams, which is the second light, which enter the optical system 11 from outside the direct angle of view of the optical system 11 and go via the optical elements 13 may form images in the light receiving area ra.

The imaging element 12 may be capable of capturing an image using visible light or invisible light such as infrared light or ultraviolet light. The imaging element 12 is, for example, a CCD (charge coupled device) image sensor, a CMOS (complementary metal oxide semiconductor) image sensor, or the like. The imaging element 12 may be a color image sensor. The imaging element 12 generates an image signal corresponding to an image received as a result of imaging.

In the imaging element 12, the outer edge of the light receiving area ra on the side where the optical elements 13 are provided may be located outside the outer edge of the exit pupil of the optical system 11 when viewed from the optical axis ox of the optical system 11. Outside the outer edge of the exit pupil means outside with respect to the optical axis ox of the optical system 11. When viewed in a direction along the optical axis ox of the optical system 11, the light receiving area ra may have a rectangular shape.

The imaging device 10 may include a plurality of the optical systems 11 and a plurality of the optical elements 13. As described above, the imaging device 10 according to the present embodiment is configured as a stereo camera including multiple cameras having a disparity with each other. As illustrated in FIG. 2, a pair of the optical system 11 and the optical elements 13 constitutes an optical device 21R having the configuration in FIG. 1, and another pair of the optical system 11 and the optical elements 13 constitutes an optical device 21L having the configuration in FIG. 1. The imaging device 10 also includes a plurality of the imaging elements 12. Each of the optical devices 21R and 21L forms an image in the predetermined light receiving area pa of the respective imaging element 12 so that inverted images generated by the second light are superimposed on an image generated by the first light.

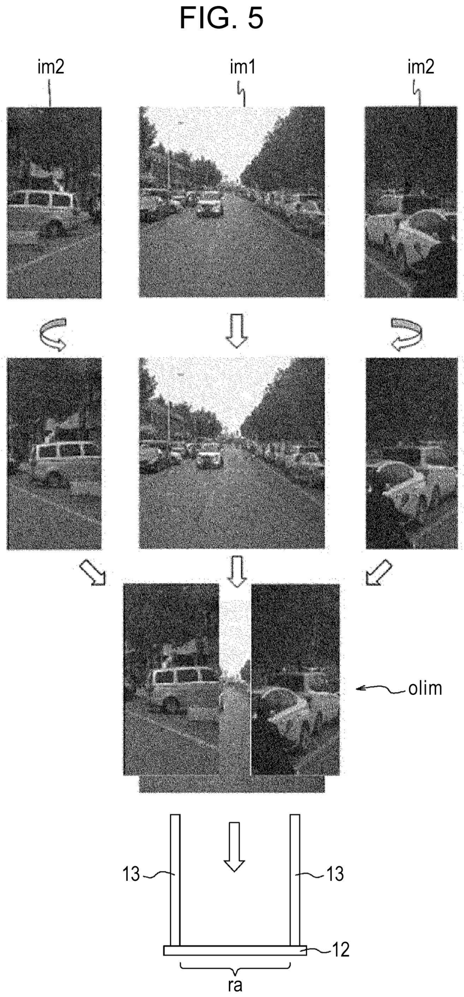

As illustrated in FIG. 5, for one camera of the imaging device 10, a first image component im1 and second image components im2 inverted by the optical elements 13, which are mirrors, are superimposed in the light receiving area ra. Therefore, the imaging element 12 of one camera captures a superimposed image olim of the first image component im1 and the second image components im2 inverted by the optical elements 13, which are mirrors. Here, since the imaging device 10 according to the present embodiment is configured as a stereo camera, multiple superimposed images olim captured from different positions can be obtained at the same time. The obtained multiple superimposed images olim are captured by multiple cameras having disparity with each other, and therefore the superimposed images olim are images of approximately the same object captured from different viewpoints. Here, as another example, multiple superimposed images olim may be captured at different times. In this case, the imaging device 10 may be configured to include multiple cameras, and the camera that captures an image may be switched among the multiple cameras depending on time. The imaging device 10 may include one camera whose viewpoint can be changed, and be configured to capture images while changing the viewpoint depending on time. The imaging device 10 may also be configured to capture images at different times without changing the viewpoint.

The controller 14 includes at least one processor, at least one dedicated circuit, or a combination of these. The processor is a general-purpose processor such as a CPU (central processing unit) or a GPU (graphics processing unit), or a dedicated processor specialized for specific processing. The dedicated circuit may be, for example, an FPGA (field-programmable gate array), an ASIC (application specific integrated circuit), or the like. The controller 14 may perform image processing on an image signal acquired from the imaging element 12.

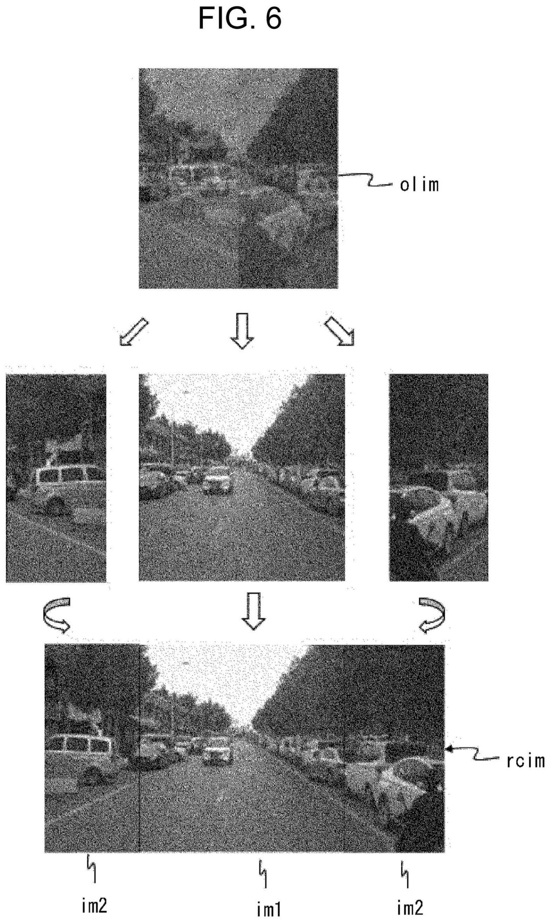

The controller 14 separates an image formed by the first light (first image component im1) and images formed by the second light (second image components im2) from an image signal of the superimposed image olim, in which an image formed by the first light and images formed by the second light are superimposed, output by the imaging element 12. As illustrated in FIG. 6, the controller 14 performs image processing to separate the superimposed image olim corresponding to the image signal into the first image component im1 and the second image components im2. The controller 14 may separate the superimposed image olim by applying an image processing method such as an independent component analysis, a wavelet method, or an image separation model. The image separation model is, for example, a model constructed by creating a learning superimposed image in which multiple images are superimposed in advance, and performing machine learning using the learning superimposed image with the multiple images serving as a correct answer. In this embodiment, the controller 14 separates an image formed by the first light and images formed by the second light using an image separation model (trained model) generated by machine learning. Here, the image separation model may be generated before the controller 14 executes the processing of separating the superimposed image olim, and may be stored in a storage device (e.g., a memory) that can be accessed by the controller 14. The image separation model may be generated, for example, by the controller 14, or may be generated by an information processing device (computer) different from the controller 14. In addition, the machine learning method is, for example, deep learning, but is not limited to a specific method.

In this embodiment, the controller 14 separates the image formed by the first light and the images formed by the second light based on the fact that the movement direction of an arbitrary subject image in the superimposed image olim is different in the image generated by the first light and the images generated by the second light. The controller 14 uses multiple superimposed images olim to detect the movement direction of an arbitrary subject image. In this embodiment, the controller 14 uses a superimposed image olim_R of the right eye (right camera) and a superimposed image olim_L of the left eye (left camera) captured at the same time. However, as described above, the controller 14 can also use multiple superimposed images captured at different times. For example, when the imaging device 10 is mounted on a vehicle and is used to measure distances to objects such as vehicles in front and pedestrians, distinguishing whether a difference in the position of an object is due to the movement of the object itself or a change in the viewpoint of the camera may be difficult. Therefore, when the imaging device 10 is mounted on a vehicle, the imaging device 10 is preferably configured as a stereo camera and the controller 14 preferably uses multiple superimposed images olim captured at the same time in order to improve detection accuracy. However, when the object of distance measurement using the imaging device 10 is an object that does not move by itself, such as a building, the controller 14 may use multiple superimposed images olim captured at different times instead of multiple superimposed images olim captured at the same time.

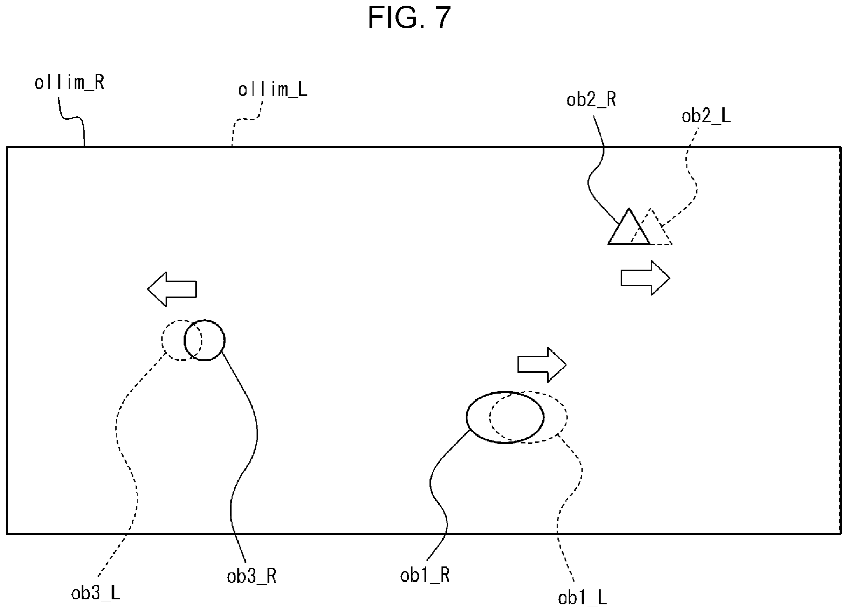

FIG. 7 is a diagram for explaining a difference in movement direction between an image formed by the first light and an image formed by the second light. Three objects ob1 to ob3 included in the superimposed image olim_R for the right eye are also included in the superimposed image olim_L for the left eye. The three objects ob1 to ob3 in the superimposed image olim_R for the right eye are indicated by solid lines. In addition, the three objects ob1 to ob3 in the superimposed image olim_L for the left eye are indicated by dashed lines. The objects ob1 and ob2 are images formed by the first light, and their positions in the superimposed image olim_L for the left eye are to the right of their positions in the superimposed image olim_R for the right eye. In other words, if the change from the position in the superimposed image olim_R for the right eye to the position in the superimposed image olim_L for the left eye is taken as the movement direction, the movement direction is to the right. In contrast, the object ob3 is an image formed by the second light, and is an image inverted with respect to the images formed by the first light. Therefore, the position of the object ob3 in the superimposed image olim_L for the left eye is to the left of the superimposed image olim_R for the right eye, and the movement direction is to the left. In this way, since the image generated by the second light is an image inverted with respect to the images generated by the first light, the movement direction of any subject image in the superimposed image olim is reversed. Therefore, the controller 14 can determine whether an arbitrary subject image in the superimposed images olim is an image generated by the first light or the second light, depending on the direction of the movement direction identified by comparing the positions in the multiple superimposed images olim. Here, a subject image for which the direction of the movement direction is detected may be, for example, a feature point of an object, or may be a block unit or pixel unit of a predetermined size obtained by dividing the superimposed image olim.

For example, the controller 14 may use optical flow to detect the movement direction of an arbitrary subject image. In optical flow, images of consecutive frames are generally used, but the controller 14 may perform processing by treating the superimposed image olim_R for the right eye and the superimposed image olim_L for the left eye as images of consecutive frames. The controller 14 calculates the optical flow at each pixel of the superimposed images olim using any method, such as the Lucas-Kanade method. Based on the calculated optical flow of each pixel, the controller 14 can determine that the image is formed by the first light if the motion vector for each pixel is in a first direction, and can determine that the image is formed by the second light if the motion vector for each pixel is in a second direction. Here, the second direction is the opposite direction to the first direction. The controller 14 can also determine that pixels that have the same motion vector and are close to each other belong to the same subject based on the optical flow of each pixel of the superimposed image olim. In addition, for example, by performing machine learning including optical flow information when generating an image separation model, an image separation model can be constructed that separates an image formed by the first light and an image formed by the second light with high accuracy in accordance with the movement direction of the subject image.

The controller 14 can generate a restored image rcim by combining the separated first image component im1 and second image components im2 (see FIG. 6). The controller 14 can use the restored image rcim to measure the distance to a subject captured in the vicinity of the imaging device 10. The controller 14 performs distance measurement using the restored image rcim based on, for example, DFD (depth from defocus). The controller 14 may perform distance measurement using the restored image rcim based on a motion disparity method (SLAM (simultaneous localization and mapping, motion stereo)), a ground distance measurement method, etc. The ground distance measurement method is a method of calculating three-dimensional coordinates based on image coordinates with the assumption that the bottom end of a subject image is located on the ground.

The controller 14 may generate a distance image based on a calculated distance. The distance image is an image in which the pixel value of each pixel corresponds to a distance. The controller 14 may output the distance image to an external device.

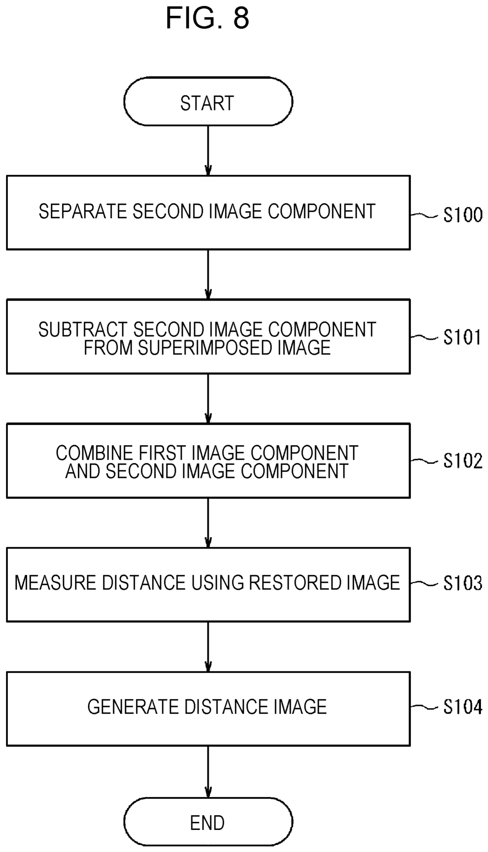

FIG. 8 is a flowchart of distance measurement processing executed by the controller 14 in this embodiment. The distance measurement processing is started every time an image signal is acquired from the imaging element 12.

In Step S100, the controller 14 separates a second image component im2 from a superimposed image olim corresponding to the acquired image signal. After the separation, the processing proceeds to Step S101.

In Step S101, the controller 14 generates a first image component im1 by subtracting the second image component im2 separated in Step S100 from the superimposed image olim. After the first image component im1 is generated, the processing proceeds to Step S102.

In Step S102, the controller 14 generates a restored image rcim by combining the second image component im2 separated in Step S101 and the first image component im1 generated in Step S101. After the restored image rcim is generated, the processing proceeds to Step S103.

In Step S103, the controller 14 uses the restored image rcim generated in Step S102 to measure the distance to each object appearing in the restored image rcim. After the distance measurement, the processing proceeds to Step S104.

In Step S104, the controller 14 generates a distance image based on each distance calculated in Step S103 and the position in the restored image rcim corresponding to that distance. In addition, the controller 14 outputs the distance image to an external device. After the distance image is generated, the distance measurement processing ends.

As described above, the imaging device 10 according to this embodiment can obtain an image having a wide angle and the resolution of a long focal length optical system by using the above configuration.

Furthermore, although distance measurement processing using the imaging device 10 has been described above, embodiments of the present disclosure can also be realized as a method or program for implementing the device, or as a storage medium on which a program is recorded. The storage medium can be, for example, an optical disk, a magneto-optical disk, a CD-ROM, a CD-R, a CD-RW, a magnetic tape, a hard disk, or a memory card.

The form in which the program is implemented is not limited to an application program such as object code compiled by a compiler or a program code executed by an interpreter. The program may be in the form of a program module incorporated into an operating system. Furthermore, the program may or may not be configured so that all processing is performed only by the CPU on a control board. The program may be configured so that part of or all of the program is performed by another processing unit mounted on an expansion board or in an expansion unit added to the board as necessary.

Although embodiments of the present disclosure have been described based on the drawings and examples, please note that one skilled in the art can make various variations or changes based on the present disclosure. Please note that, therefore, these variations or changes are included within the scope of the present disclosure. For example, the functions included in each component etc. can be rearranged so long as no logical contradictions arise, and multiple components can be combined into one component or divided into multiple components.

All of the constituent elements described in the present disclosure and/or all of the disclosed methods or all of the steps of disclosed processing can be combined in any combination, except for combinations in which their features would be mutually exclusive. Each feature described in the present disclosure may be replaced with an alternative feature serving the same, equivalent or similar purpose, unless explicitly stated otherwise. Therefore, unless explicitly stated to the contrary, each of the disclosed features is only one example of a comprehensive set of identical or equivalent features.

Furthermore, the embodiments according to the present disclosure are not limited to any of the specific configurations of the embodiments described above. The embodiments according to the present disclosure can be extended to all novel features, or combinations thereof, described in the present disclosure, or all novel methods, or processing steps, or combinations thereof, described in the present disclosure.

In the present disclosure, descriptions such as "first" and "second" are identifiers for distinguishing between the configurations. In the present disclosure, the configurations distinguished by descriptions such as "first" and "second" may have their numbers interchanged. Exchanging of the identifiers takes place simultaneously. Even after exchanging the identifiers, the configurations are distinguishable from each other. The identifiers may be deleted. The configurations that have had their identifiers deleted are distinguishable from each other by symbols. The description of identifiers such as "first" and "second" in the present disclosure is not intended to be used to interpret the order of the configurations or to justify the existence of identifiers with smaller numbers.

### REFERENCE SIGNS

10 imaging device
11 optical system
12 imaging element
13 optical element
14 controller
21, 21L, 21R optical device
im1 first image component
im2 second image component
olim, olim_L, olim_R superimposed image
ox optical axis
pa predetermined light receiving area
ra light receiving area
rcim restored image

## Claims

1. An imaging device comprising:
an optical system configured to form an image of incident first light on a predetermined light receiving area of an imaging element;
an optical element configured to guide second light, an angle between an optical axis of the optical system and a principal ray of the second light incident on the optical system being different from that of the first light, to the predetermined light receiving area, superimpose the second light on the image of the first light, and allow the second light to be captured by the imaging element; and
a controller configured to separate the image formed by the first light and an image formed by the second light from an image signal of a superimposed image output by the imaging element in which the image formed by the first light and the image formed by the second light are superimposed,
wherein the controller separates the image formed by the first light and the image formed by the second light on a basis that a movement direction of an arbitrary subject image in the superimposed image is different in the image formed by the first light and the image formed by the second light.

2. The imaging device according to claim 1, wherein the controller uses optical flow to detect the movement direction of the arbitrary subject image.

3. The imaging device according to claim 1 or 2, comprising:
a plurality of the optical systems and a plurality of the optical elements, the optical systems and optical elements configuring a stereo camera,
wherein the controller uses a plurality of the superimposed images captured from different positions at a same time to detect the movement direction of the arbitrary subject image.

4. The imaging device according to claim 1 or 2, wherein the controller uses a plurality of the superimposed images captured at different times to detect the movement direction of the arbitrary subject image.

5. The imaging device according to any one of claims 1 to 4,
wherein the controller separates the image formed by the first light and the image formed by the second light using an image separation model generated by machine learning, and
the image separation model is a model constructed by creating a learning superimposed image in which multiple images are superimposed in advance, and performing machine learning on the learning superimposed image using the multiple images as a correct answer.

6. An imaging device comprising:
an optical system configured to form an image of incident first light on a predetermined light receiving area of an imaging element, and
a controller configured to separate an image formed by the first light and an image formed by second light from an image signal of a superimposed image captured by superimposing the image of the second light for which an angle between an optical axis of the optical system and a principal ray of the second light incident on the optical system is different from that of the first light,
wherein a movement direction of an arbitrary subject image in the superimposed image is different in the image formed by the first light and the image formed by the second light.
